# EUROPEAN PATENT APPLICATION

(11) **EP 3 995 472 A1**
(43) Date of publication of application: **11.05.2022**
(21) Application number: 20206161.0
(22) Date of filing: 06.11.2020
(51) Int. Cl.: C05B 7/00, C05B 9/00, C05C 1/00, C05C 1/02, C05G 5/12, C05G 5/30

(54) **AMMONIUM NITRATE-BASED COMPOSITION COMPRISING STRUVITE AND METHOD OF MANUFACTURE THEREOF**

(71) Applicant: Yara International ASA, 0277 Oslo (NO)
(72) Inventor: Winne, Erika, 4541 HJ Terneuzen (NL); Teirlynck, Davy, 9180 Moerbeke-Waas (BE); van de Wijnckel-Haverbeke, Petra G.P., 4508 AG Waterlandkerkje (NL); Rusydi Fatahillah, Mohammad, 42117 Serang, Banten (ID)
(74) Representative: AWA Sweden AB

(57) **Abstract**

The present disclosure is related to a solid, particulate composition comprising ammonium nitrate and struvite. In another aspect, the present disclosure provides a method for the manufacture of a solid, particulate composition comprising ammonium nitrate and struvite. The present disclosure also provides the use of struvite as an additive in the manufacture of a solid, particulate composition comprising ammonium nitrate.

## Description

### Field of the invention

The present disclosure is related to a solid, particulate composition comprising ammonium nitrate and struvite. In another aspect, the present disclosure provides a method for the manufacture of a solid, particulate composition comprising ammonium nitrate and struvite. The present disclosure also provides the use of struvite as an additive in the manufacture of a solid, particulate composition comprising ammonium nitrate.

### Background of the invention

Ammonium nitrate is an important inorganic material widely used today. It is used in different industries, and its two main applications are agriculture as a fertilizer, and as an explosive. As a fertilizer, it provides nitrogen to the soil in two forms: ammonium ions and nitrate ions. Nitrate ions are easily absorb by crops and are considered a quick action fertilizer source. Ammonium ions may also be absorbed as such by crops but at a much lower rate than nitrate. Ammonium ions are also slowly oxidized to nitrate ions by agents, such as bacteria, enzymes, and fungi, contained in soils or crop roots, and are then readily absorbed by crops. Ammonium ions are considered a slow-acting nitrogen source.

Solid, particulate compositions comprising ammonium nitrate often have a low hardness or crushing strength, meaning that the particles easily break during production, storage, handling and transport. Manufacturing methods have been developed to remedy this issue. For example, GB2045735B (Compagnie Neerlendaise de l'azote, 1983) discloses the manufacture of ammonium nitrate particles containing magnesium nitrate.

Furthermore, there is a growing interest to use renewable materials in industrial processes to reduce the environmental footprint of the process. Most inorganic salts, such as magnesium nitrate and aluminium sulphate, are prepared from or directly obtained from non-renewable sources, such as mining operations.

Despite the progress accomplished in the field, there is always a need to develop novel and sustainable fertilizer compositions that perform better than the current state of the art.

### Summary of the invention

It was discovered that it was possible to prepare a solid, particulate composition comprising ammonium nitrate with an increased hardness, or particle strength, by adding struvite to the solid, particulate composition comprising ammonium nitrate.

In its broadest aspect, the present disclosure provides a solid, particulate composition comprising ammonium nitrate and struvite.

In another aspect, the present disclosure provides a method for the manufacture of a solid, particulate composition comprising ammonium nitrate and struvite.

In another aspect, the present disclosure also provides the use of struvite as an additive in the manufacture of a solid, particulate composition comprising ammonium nitrate.

In another aspect, the present disclosure provides the use of a solid, particulate composition comprising ammonium nitrate and struvite as a fertilizer.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.

In its broadest aspect, the present disclosure provides a solid, particulate composition comprising ammonium nitrate and struvite.

Struvite is a phosphate mineral containing ammonium and magnesium as cations. Its chemical formula is NH₄MgPO₄·6H₂O. Phosphorus is an important element in the nutrition of humans and animals, as it is a crucial atom for the building of various molecules, such as DNA. Currently, the phosphorus used in agriculture is mined from the earth crust. However, there are finite amounts of phosphorus that can be obtained this way and some works estimate that suppliers will run out of phosphorus within 100 years. So, there is a growing interest in finding new sources of phosphorus. New processes have been developed to recover phosphorus from waste streams, especially wastewaters from sewage systems. Some of these processes produce struvite as a phosphorus-containing end-product. It may be envisioned to directly apply struvite in farming fields as a phosphorus source. However, we have surprisingly found that struvite may be used in the manufacturing processes of solid, particulate ammonium nitrate-based fertilizers, with unexpected improved performances as a result.

Solid, particulate compositions comprising ammonium nitrate have been sold for decades for use as a fertilizer. It is well known that ammonium nitrate-based solid, particulate compositions have some issues, such as low particle hardness. This means that the particles do not tolerate handling operations very well. Particles will break and be crushed, generating smaller particles and dust, and in worst cases become pulverized. This impacts the final application in farming fields, whether performed by mechanical means such as a spreader or even manual applications. Thus, the impact is both on expected application amount, and which type of mode of application actually is feasible with the material at hand. Additives have been researched, examined, and developed to improve the properties of ammonium nitrate-based solid, particulate compositions. For example, GB1515898 (Australian Fertilizers Ltd, 1978) discloses the addition of aluminium sulphate to an ammonium nitrate melt to produce a free-flowing material. GB2045735B (Compagnie Neerlandaise de I'azote, 1983) discloses the addition of magnesium nitrate to an ammonium nitrate melt to decrease the porosity of solid ammonium nitrate particles.

It was now found that it was possible to prepare a solid, particulate composition comprising ammonium nitrate and struvite that had a higher particle hardness than without struvite.

In one embodiment, the solid, particulate composition comprises 30 to 80 wt%, such as 35 to 80 weight%, in particular 40 to 80 weight%, more in particular 45 to 80 weight%, even more in particular 50 to 80 weight%, even more in particular 55 to 80 weight%, even more in particular 60 to 80 weight%, of ammonium nitrate. For example, the solid, particulate composition comprises ammonium nitrate in an amount of 30-80 wt%, such as 30-75, 30-70, 30-60, 30-55, 30-50, 40-75, 40-70, 40-60, 40-55, 45-85, 45-80, 50-80, 55-80, or 60-80 wt%.

In one embodiment, the solid, particulate composition comprises 0.1 to 10 weight% of struvite, in particular 0.5 to 10, more in particular 1.0 to 10 weight% of struvite. For example, the solid, particulate composition may comprise 0.1 to 5.0, 0.2 to 4.0, 0.3 to 3.0, 0.5 to 3.0, 0.5 to 2.0, 2.0 to 10, 3.0 to 10, 4.0 to 10, or 5.0 to 10 weight% of struvite. It was found that the particle hardness is improved even with very low amounts of struvite.

In one embodiment, the solid, particulate composition comprises 40 to 90 weight% of ammonium nitrate and 0.1 to 10 weight% of struvite.

In one embodiment, the solid, particulate composition comprises 50 to 90 weight% of ammonium nitrate and 0.1 to 10 weight% of struvite.

In one embodiment, the solid, particulate composition comprises 50 to 80 weight% of ammonium nitrate and 0.1 to 10 weight% of struvite.

In one embodiment, the solid, particulate composition comprises 60 to 80 weight% of ammonium nitrate and 0.1 to 10 weight% of struvite.

In one embodiment, the solid, particulate composition comprises 40 to 90 weight% of ammonium nitrate and 1.0 to 10 weight% of struvite.

In one embodiment, the solid, particulate composition comprises 50 to 90 weight% of ammonium nitrate and 1.0 to 10 weight% of struvite.

In one embodiment, the solid, particulate composition comprises 50 to 80 weight% of ammonium nitrate and 1.0 to 10 weight% of struvite.

In one embodiment, the solid, particulate composition comprises 60 to 80 weight% of ammonium nitrate and 1.0 to 10 weight% of struvite.

In one embodiment, the solid, particulate composition comprises an additive, e.g. an inorganic filler, in particular a calcium-containing inorganic filler. The additive may alternatively be ammonium sulphate. In one embodiment, the solid, particulate composition comprises ammonium sulphate and/or an inorganic filler, in particular wherein the inorganic filler is a calcium-containing inorganic filler. For fertilizer applications, it is preferred to add a non-explosive component to ammonium nitrate-based compositions to render the composition inexplosive. For example, a filler, often an inorganic filler, is added to ammonium nitrate-based compositions to eliminate that risk. The inorganic filler may also have additional purposes: it may contain elements needed by the plant, thus transforming the single nutrient-containing ammonium nitrate into a multi-nutrient fertilizer; and it may also improve the physical properties of the ammonium nitrate-based material, such as porosity and particle strength. As discussed above, known solid, particulate ammonium nitrate has a rather low particle strength, meaning that the particles are sensitive to impacts, and may not tolerate repeated handling operations.

In one embodiment, the calcium-containing inorganic filler is selected from the group of dolomite, gypsum, lime, limestone and/or mixtures thereof. Calcium-containing fillers such as dolomite, gypsum, limestone are widely used as fillers in ammonium nitrate-based fertilizer compositions. These materials are cheap and available in large scale. They do not react very much with ammonium nitrate, and significantly lower the explosive risk of ammonium nitrate-based compositions. Kaolin clays, a silicate-alumina material with the general formula AlₓSi_{y}Oₘ(OH)ₙ, where x, y, m and n are numbers, in particular wherein x, y and m are comprised between 1 and 20, more in particular between 1 and 10, may also be used as fillers in ammonium nitrate-based solid, particulate compositions. Examples of suitable silicate-alumina materials with the general formula AlₓSi_{y}Oₘ(OH)ₙ are kaolinite Al₂Si₂O₅(OH)₄, halloysite Al₂Si₂O₅(OH)₄, palygorskite (Mg,Al)₂Si₄O₁₀(OH)·4(H₂O), etc.

In one embodiment, the solid, particulate composition comprises 9-30 wt%, such as 10 to 30 weight%, in particular 12 to 25 weight%, in particular 14 to 25 weight%, more in particular 15 to 25 weight%, even more in particular 16 to 25 weight% of the inorganic filler. It was found that an amount between 9 to 30 weight% of inorganic filler was satisfying to reduce the explosive risk of the composition without decreasing the agronomical value thereof.

In one embodiment, the solid, particulate composition comprises 21 weight% of dolomite. In one embodiment, the solid, particulate composition comprises 24.5 weight% of gypsum and 3 weight% of dolomite. In one embodiment, the solid, particulate composition comprises 15 weight% of gypsum and 5 weight% of dolomite.

In one embodiment, the solid, particulate composition comprises ammonium sulphate. It is known to add ammonium sulphate to a melt of ammonium nitrate to obtain solid particles of ammonium sulphate nitrate. Since ammonium sulphate is an inorganic material, it reduces the explosive risk of the ammonium nitrate-based composition and reduces the need for an inorganic filler to decrease the explosive risk. Ammonium sulphate has the advantage compared to inorganic fillers not comprising nutrient components, that its components, ammonium and sulphate ions, are nutrients required by crops. Therefore its presence does not decrease the agronomical value of the product as fillers not comprising nutrients, may. These particles have the advantage of providing two different nutrients, nitrogen and sulphur, to crops. When the solid, particulate composition comprises ammonium nitrate and ammonium sulphate, the inorganic filler may be present at a level between 1 and 10 weight%. When the solid, particulate composition comprises ammonium nitrate and ammonium sulphate, the amount of ammonium sulphate may be 30-60 wt%. In one embodiment, the solid, particulate composition comprises 30 to 50 weight% of ammonium nitrate and 30 to 60 weight% of ammonium sulphate. In one embodiment, the solid, particulate composition comprises 35 to 45 weight% of ammonium nitrate and 35 to 55 weight% of ammonium sulphate. In one embodiment, the solid, particulate composition comprises 35 to 45 weight% of ammonium nitrate and 40 to 55 weight% of ammonium sulphate. In one embodiment, the solid, particulate composition comprises 30 to 50 weight% of ammonium nitrate, 30 to 60 weight% of ammonium sulphate and 1 to 10 weight% of an inorganic filler, in particular gypsum. In one embodiment, the solid, particulate composition comprises 30 to 50 weight% of ammonium nitrate, 30 to 60 weight% of ammonium sulphate and 1 to 8 weight% of an inorganic filler, in particular gypsum. In one embodiment, the solid, particulate composition comprises 30 to 50 weight% of ammonium nitrate, 30 to 60 weight% of ammonium sulphate and 1 to 6 weight% of an inorganic filler, in particular gypsum. In one embodiment, the solid, particulate composition comprises 35 to 45 weight% of ammonium nitrate, 45 to 55 weight% of ammonium sulphate and 1 to 3 weight% of gypsum.

In one embodiment, the solid, particulate composition comprises 30 to 50 weight% of ammonium nitrate, 30 to 60 weight% of ammonium sulphate and 0.1 to 10 weight% of struvite.

In one embodiment, the solid, particulate composition comprises 30 to 50 weight% of ammonium nitrate, 30 to 60 weight% of ammonium sulphate, 0.1 to 10 weight% of struvite, and 1 to 10 weight% of an inorganic filler, in particular gypsum.

In one embodiment, the solid, particulate composition comprises one of magnesium nitrate, aluminium sulphate and/or mixtures thereof. It may an advantage to add a second additive, such as magnesium nitrate and aluminum sulphate, in addition to struvite to further improve the production process and/or the physical properties, such as hardness, caking, of the solid, particulate composition comprising ammonium nitrate and struvite. These compounds are known to be used in the manufacture of ammonium nitrate-based compositions and may improve different properties than the struvite and may be needed depending on the requirements for a specific product. For example, magnesium nitrate is used as a granulation additive to facilitate the granulation process in a granulator, for example a fluidized bed granulator. Aluminum sulphate may be used to decrease the viscosity of the melt and therefore improve the manufacturing process.

In one embodiment, the solid, particulate composition comprises 0.1 to 5.0 weight, in particular 0.1 to 4.0 weight%, more in particular 0.1 to 3.0 weight%, even more in particular 0.1 to 2.0 weight% of one of magnesium nitrate, aluminium sulphate and/or mixtures thereof. It was found that an amount between 0.1 and 5.0 weight% of additives, such as magnesium nitrate and aluminum sulphate, was satisfying to achieve the desired effect, as explained above. Magnesium and nitrate are crop nutrients, so for agricultural applications, their presence is not an obstacle, but rather a benefit. However, aluminum may be toxic to some crops, so it may be desirable to limit its amount.

In one embodiment, the solid, particulate composition comprises struvite and magnesium nitrate in a weight ratio between 3:1 to 1:10, in particular between 3:1 to 1:5, more in particular between 3:1 to 1:2, even more in particular between 3:1 to 1:1. It was observed that when the composition comprised struvite and magnesium nitrate, an amount of magnesium nitrate reacted with struvite. This increased the swelling of the solid, particulate composition when exposed to moisture and decreased its crushing strength. Having a ratio of struvite to magnesium nitrate below 3:1, in particular between 3:1 and 1:10, ensured that the solid, particulate composition still contained some unreacted magnesium nitrate which increased the crushing strength of the particle, especially after exposing the solid, particulate composition to moisture.

In one embodiment, the solid, particulate composition comprises struvite, an inorganic filler, and optionally one or more of magnesium nitrate or aluminium sulphate, wherein the combined weight of struvite, the inorganic filler and optionally the one or more of magnesium nitrate or aluminum sulphate, represents 10 to 40 weight%, in particular 10 to 35 weight%, more in particular 15 to 35 weight%, even more in particular 15 to 25 weight% of the total weight of the solid, particulate composition.

In one embodiment, the solid, particulate composition comprises a coating layer, in particular an organic coating layer, such as a coating layer comprising a wax, in particular a petroleum wax or a paraffin wax, and an alkyl phosphate ester, and an amine. It is well known to apply a conditioning agent, for example, in the form of a coating layer, to solid, particulate compositions, to further improve their properties. Hygroscopicity, dustiness, caking are characteristics that may be improved by the addition of such agents. Ammonium nitrate-based composition are quite hygroscopic, so it may be an advantage to apply a coating layer that is able to slow down the rate of water absorption by the composition. In particular, it was found that a coating layer comprising a wax, in particular a petroleum wax or a paraffin wax, an alkyl phosphate ester and an amine, reduces the hygroscopicity, dustiness, and caking of the solid, particulate composition.

In one embodiment, the median particle size, or dp50, of the solid, particulate composition is between 1.0 and 5.0 mm, in particular between 2.5 and 4.0 mm, as measured by sieving steps. For fertilizer applications, it is an advantage to have particles with an average particle size between 1.0 and 5.0 mm. Such particles may be handled easily and spread in fields by mechanical means. The average particle size may be measured by a number of means, for example with a series of sieves with decreasing hole sizes.

In one embodiment, the solid, particulate composition is a homogeneous composition. For fertilizer compositions, it may be an advantage to produce a solid, particulate, homogeneous composition. The wording a solid, homogeneous particle, as used herein, means that the solid particle is uniform with respect to its composition throughout the particle. An homogeneous particle may still comprise solid fractions of its different components as long as the solid fractions are considerably smaller than the homogeneous solid particles. In contrast, a heterogeneous particle varies in its composition throughout the particle. Notably, homogeneous particles are easier to produce because they require a single solidification step.

In one embodiment, the solid, particulate composition is an homogeneous composition coated with a coating layer, preferably an organic coating. The homogeneous composition refers to the core of the solid, particulate composition.

In one embodiment, the solid, particulate composition further comprises a core comprising or consisting of ammonium nitrate, i.e. each solid composition particle has a core of or comprising ammonium nitrate. The amounts of the different components included in the solid, particulate composition may still be the same but there is then, due to the core of ammonium nitrate, less ammonium nitrate present in the layer surrounding the core comprising the other components of the solid, particulate composition. It may be an advantage to incorporate struvite in only a section of the solid, particulate composition, for example as part of a layer surrounding a core of ammonium nitrate. This may have benefits such as increasing the ammonium nitrate content of the solid, particulate composition, and/or reducing the amount of struvite used in the composition while preserving the improved hardness of the composition particle.

In one embodiment, the solid, particulate composition comprises 60 to 80 weight% of ammonium nitrate, 10 to 25 weight% of dolomite, 1.0 to 5.0 weight% of struvite and 0 to 5.0 weight% of magnesium nitrate.

In one embodiment, the solid, particulate composition comprises 60 to 80 weight% of ammonium nitrate, 10 to 25 weight% of dolomite, 1.0 to 5.0 weight% of struvite and 0 to 5.0 weight% of aluminum sulphate.

In another aspect, the present disclosure provides a method for the manufacture of a solid, particulate composition comprising ammonium nitrate and struvite. The method comprises the steps of: a) providing a melt comprising ammonium nitrate; b) adding an amount of struvite to the melt provided in step a); c) mixing the melt comprising ammonium nitrate and struvite; and d) processing the melt obtained in step c) to form a solid, particulate composition.

The ammonium nitrate melt may be prepared by reacting a stream of ammonia with a stream of nitric acid. One mole of ammonia reacting with one mole of nitric acid gives one mole of ammonium nitrate. The ammonium nitrate melt may also be prepared by melting solid ammonium nitrate particles, or by evaporating an aqueous solution of ammonium nitrate. The melting point of pure ammonium nitrate is 169.6 °C. However, since the melt often comprises other elements, such as water and/or impurities, it may possible to obtain a melt at a lower temperature. In one embodiment, the temperature of the melt is comprised between 160 and 170 °C. In one embodiment, the temperature of the melt is comprised between 162 and 168 °C.

Once a melt of ammonium nitrate is prepared, struvite may be added to the melt. Struvite may be added in a solid form, in particular in a solid, particulate form. To facilitate its distribution within the melt and ensure that the final solid, particles do not contain large pieces of struvite, the struvite may be added as a powder to the melt. Struvite may be purchased already grinded down to a powder, but it may be envisaged to direct the struvite first to a crusher to obtain the desired particle size and then add these small particles to the ammonium nitrate melt. Alternatively, struvite may be added to the ammonium nitrate melt as a solution or suspension in a liquid, in particular water. Struvite is poorly soluble in water so if the liquid media or solvent is essentially water at neutral pH, struvite will be added as a suspension to the ammonium nitrate melt. It may be possible to dissolve struvite in a liquid media, such as an organic solvent before addition to the ammonium nitrate melt. It also possible to dissolve struvite in an aqueous solution with a pH below 7, before addition to the ammonium nitrate melt.

The melt comprising ammonium nitrate and struvite is mixed for an amount of time to distribute the struvite within the melt. It may be possible to visually observe the melt and decide when a sufficient mixing has been reached. It may also be possible to take a small sample from the melt, cool it down and analyze with various methods known in the art to estimate whether or not the melt is sufficiently mixed.

Once a melt with a satisfying homogeneity has been obtained, it may be processed to obtain solid particles, or alternatively be applied as a layer to an ammonium nitrate comprising core, e.g. as a covering or encompassing layer. This stage may also be referred to as the particulation or granulation stage. A number of processes are known to transform a melt comprising ammonium nitrate into solid particles, such as fluidized bed granulation, pan granulation, drum granulation, prilling tower, spherodizer, pugmill and more. The choice of the granulation technique may be done based on the technical characteristics desired for the final solid, particulate composition. All the transformation techniques, such as granulation and prilling, produce solid compositions with variable physical characteristics such as particle strength, dustiness, average size, size distribution. They also require a different investment and occur variable operating costs.

In one embodiment, the processing step d) comprises the step of processing the melt in the presence of solid particles comprising ammonium nitrate. For example, the melt can be sprayed in a coating apparatus, such as a coating drum containing solid particles comprising ammonium nitrate. Alternatively, the melt comprising ammonium nitrate and struvite can be directed to a fluidized bed granulator using solid particles comprising ammonium nitrate as seeds. The resulting product is a solid, particulate composition comprising a core comprising ammonium nitrate and a layer covering the core comprising ammonium nitrate and struvite.

In one embodiment, the amount of struvite added to the melt is such that the final solid particles produced from the melt comprise 0.1 to 10 weight% of struvite, in particular 0.5 to 10, more in particular 1.0 to 10 weight% of struvite. It was found that the particle hardness is improved even with very low amounts of struvite.

In one embodiment, the method comprises the step of: adding a filler, in particular an inorganic filler and/or ammonium sulphate to the melt comprising ammonium nitrate, before, after, or simultaneously as addition of struvite.

When a solid, particulate composition comprising ammonium nitrate is meant to be used as a fertilizer, it is highly preferred to dilute the ammonium nitrate content with one or more non-explosive compounds, for example a filler, in particular an inorganic filler, to eliminate the explosive risk. The ammonium nitrate content can be decreased to between 60 and 80 weight% and still remain an attractive fertilizer composition. Suitable fillers for addition to ammonium nitrate melts are well known in the field of fertilizer manufacturing. These fillers do not possess any explosive properties, are relatively unreactive towards ammonium nitrate and ammonium nitrate-based melts and compatible with the production process.

In one embodiment, the inorganic filler is calcium-containing fillers selected from the group of limestone, dolomite, gypsum, lime, and/or mixtures thereof. Two of the most common fillers used in the manufacture of ammonium nitrate-based fertilizers are dolomite and gypsum. These two solid fillers are widely available and relatively cheap, and they both contain secondary nutrients important for crop nutrition such as calcium and magnesium for dolomite, and calcium and sulphur for gypsum. Their presence increases the agronomical value of the composition compared to ammonium nitrate alone. A small amount, in particular less than 20% of the filler, more in particular less than 10% of the filler, even more in particular less than 5% of the filler, may react with the ammonium nitrate melt and produce new compounds. For example, dolomite may react with the ammonium nitrate melt and produce some calcium nitrate. It may be desirable that these fillers are solids at room temperature to ensure that the melt comprising ammonium nitrate and the filler can be granulated. It may also be desirable that the filler contain elements that the crops require to increase the agronomical value of the fertilizer product. It might be preferable that the filler does not comprise elements or chemicals that are toxic to plants.

In one embodiment, the inorganic filler and/or ammonium sulphate is added to the melt comprising ammonium nitrate before the addition of struvite. In one embodiment, the inorganic filler and/or ammonium sulphate is added to the melt comprising ammonium nitrate after the addition of struvite. In one embodiment, the inorganic filler and/or ammonium sulphate, and struvite are added simultaneously to the melt comprising ammonium nitrate. For example, the inorganic filler and/or ammonium sulphate, and struvite may be premixed before addition to the melt comprising ammonium nitrate.

In one embodiment, the amount of filler added to the melt is such that the final solid particles produced from the melt comprise 9 to 30 weight%, such as 10 to 30 weight% of the inorganic filler, in particular 15 to 25 weight% of the inorganic filler. It was found that an amount between 10 to 30 weight% of the inorganic filler was satisfying to reduce the explosive risk of the composition without decreasing the agronomical value thereof.

Once the solid, particulate ammonium nitrate-based composition is obtained, some particles are analyzed in a detonation test to ensure that these particles are not explosive and safe for transport and handling. A number of procedures have been developed to test whether ammonium nitrate-based compositions are explosive. An example of such a test may be: the particles are put through five thermal cycles where they are heated up to 50 °C then cooled to 25 °C. The particles are then mixed with 2,4,6-trinitrotoluene () and a detonation test of the mixture is performed on a steel plate. The test results may be categorized in four different levels depending on the damage on the plate from 1 for very high risk, to 4 for "composition cannot detonate". The product obtained by the method described herein consistently achieves a 4 on the detonation test.

In one embodiment, one or more of magnesium nitrate and aluminium sulphate is added to the melt comprising ammonium nitrate, before, after or simultaneously as struvite, and optionally before, after or simultaneously as an inorganic filler and/or ammonium sulphate. It may an advantage to add an additive, such as magnesium nitrate and aluminum sulphate, in addition to struvite to further improve the manufacturing process and/or the properties of the solid, particulate composition comprising ammonium nitrate and struvite. These compounds may improve different properties than the struvite and may be needed depending on the requirements for a specific product. These compounds may also improve the manufacturing method, for example by lowering the viscosity of the melt which makes it easier to process.

In one embodiment, the amount of magnesium nitrate and/or aluminum sulphate added to the melt is such that the final solid particles produced from the melt comprise comprises 0.1 to 5.0 weight, in particular 0.1 to 3.0 weight% of magnesium nitrate and/or aluminium sulphate. It was found that an amount between 0.1 and 5.0 weight% of additives, such as magnesium nitrate and aluminum sulphate, was satisfying to achieve the desired effect. Magnesium and nitrate are crop nutrients, so for agricultural applications, their presence is not an obstacle, but rather a benefit. However, aluminum may be toxic to some crops, so it may be desirable to limit its amount.

In one embodiment, the one or more of magnesium nitrate and aluminium sulphate is added to the melt comprising ammonium nitrate before the addition of struvite. In one embodiment, the one or more of magnesium nitrate and aluminium sulphate is added to the melt comprising ammonium nitrate after the addition of struvite. In one embodiment, the one or more of magnesium nitrate and aluminium sulphate, and struvite are added simultaneously to the melt comprising ammonium nitrate. In one embodiment, magnesium nitrate and struvite are added simultaneously to the ammonium nitrate melt, and the ammonium sulphate and/or inorganic filler, in particular dolomite, is added later.

In one embodiment, the melt comprising ammonium and struvite, may be heated up to reduce its water content before it is processed to obtain solid particles. The melt may comprise a certain amount of water during the manufacturing steps that is necessary to obtain a melt that may be moved and pumped in the system. However, the final stage requires a melt with a specific, often low, amount of water. For example, a fluidized bed granulator requires a melt with a water content below 5.0 weight%, in particular between 2.0 and 4.5 weight%, more in particular between 2.5 and 4.0 weight%. So, it may be necessary to heat up the melt in a vessel until the water content has reached the desired level. Means to achieve such a water content are well known in the art.

In one embodiment, one additional source of nutrients is added to the melt comprising ammonium nitrate. For a fertilizer composition, it may be an advantage that it comprises more nutrients than nitrogen comprised in ammonium nitrate. Fertilizer composition comprising at least two nutrients increase the value of the composition and save time, money and water to the farmer. The nutrient may be selected from the group of the known crop nutrients: phosphorus, potassium, calcium, magnesium, sulphur, zinc, copper, manganese, molybdenum, iron, chloride, nickel and boron. In one embodiment, the ammonium nitrate melt comprises one or more selected from the group of colemanite, ulexite, zinc borate, boric acid, manganese oxide, zinc oxide, and/or mixtures thereof.

In one embodiment, the method according to the present disclosure further comprises: applying a coating layer of a conditioning agent to the particles obtained in step d). Fertilizer particles have to endure long transport and storage times before being used in the fields. They may also be exposed to environments with high humidity. It is important for the particles to retain their physical properties until the field application, otherwise the field application, for example with a spreader, will not be even or regular. A common method in the field of fertilizer particles is to add a coating layer of a conditioning agent to the particles to improve their properties and maintain them during a long period of time. The conditioning agent may have several effects, such as anti-caking, moisture-repellent and/or reducing dust formation.

In one embodiment, the conditioning agent comprises a non-polar material, such as an organic material, in particular a liquid organic material, e.g. an oil, wax, resin or the like, or any mixture thereof. The conditioning agent preferably also include an alkyl phosphate ester, and an amine. In one embodiment, the conditioning agent comprises a non-polar material, in particular a liquid organic material, such as an oil, wax, resin or the like and any mixture thereof, an alkyl phosphate ester, and an amine. In one embodiment, the conditioning agent comprises a wax, in particular a paraffin wax or a hydrocarbon wax, an alkyl phosphate ester, and an amine. In one embodiment, the conditioning agent comprises a wax, in particular a paraffin wax or an hydrocarbon wax, an alkyl phosphate ester, and a mixture of amines, in particular a mixture of primary amines, such as octadecylamine, and hexadecylamine. It was found that such a conditioning agent has a positive impact on water absorption, i.e. hygroscopicity.

In another aspect, the present disclosure also provides the use of struvite as an additive in the manufacture of a solid, particulate composition comprising ammonium nitrate. It was found that struvite may be added to a melt comprising ammonium nitrate to improve the physical properties, for example particle hardness, of the solid, particulate composition made from this melt.

In another aspect, the present disclosure provides the use of a solid, particulate composition comprising ammonium nitrate and struvite as a fertilizer. Ammonium nitrate is a known fertilizer. Struvite is not toxic to crops. The addition of struvite may also be beneficial to the crop since it comprises magnesium and phosphorus that are required by crops for optimal health and growth.

### Test for crushing strength:

The strength (= crushing strength, hardness) of fertilizer granules/prills is an important property used in quality control of fertilizer production. The crushing strength is one of the main parameters for evaluation of the physical properties of fertilizers. Individual granules/prills are subjected to a measured force applied by means of a metal plunger or rod. The force (kg force) at which the granule/prill fractures, is taken as a measurement of the strength of the particle. A single particle or prill is placed on a kitchen scale and the rod is pressed slowly downward on the particle until the particle fractures. The crushing strength is the weight read on the scale when the particle fractures. For one batch of product, the crushing strength of 25 particles of the same batch are measured and the average value represents the crushing strength of the product

### Example 1

An ammonium nitrate melt was prepared by reacting ammonia and nitric acid and directed to a mixing tank. To 113.9 kg of the melt was added sequentially 2.1 kg of struvite, 3.2 kg of magnesium nitrate. Thereafter, the melt was stirred for 12 min and 29.5 kg of dolomite was then added over 15 mins. The melt was stirred for about 22 min and directed to a fluidized bed granulator. The average diameter of the particles was measured in a sieving device. It was found that the particles had an average diameter, Dp50, of 3.53 mm with 31% of the particles having a dimeter equal to or less than 3.55 mm, including 20% having a diameter equal to or less than 3.15 mm. The hardness of the particles having a diameter equal to or below 3.15 mm was measured at 4.6 kg.

Particles without struvite, comprising 76 weight% of ammonium nitrate, 2.0 weight% of magnesium nitrate and 20 weight% dolomite, were prepared for comparative studies. The hardness of the granules with a diameter equal to or below 3.15 mm was measured to be 4.0 kg.

The present experiment shows a significant impact of the presence of struvite on the hardness of ammonium nitrate-based particles.

### Example 2:

Another particulate composition was prepared using the method described in example 1 by adding sequentially 19 weight% of dolomite, 0.8 weight% of magnesium nitrate and 2.6 weight% of struvite to a melt of ammonium nitrate. The crushing strength of the particles with a diameter of 3.55 mm was measured at 5.5 kg. The particles were then processed in a swelling experiment: particles are sealed in a container and undergo 5 cycles of heating and cooling, from 25 °C to 50 °C and back to 25 °C, of 4 hours each. The volume of the swelled particles was measured as being 16% higher than the non-swelled particles and the crushing strength of the swelled particles was measured at 2.9 kg.

The non-swelled particles were analyzed by Inductively Coupled Plasma to measure the amount of magnesium nitrate, but a smaller amount than 0.8 weight% was found. It was thought that the magnesium nitrate reacted with struvite.

Another particulate composition was prepared using the method described in example 1 by adding sequentially 19 weight% of dolomite, 1.6 weight% of magnesium nitrate and 2.6 weight% of struvite to a melt of ammonium nitrate, i.e. with a ratio of struvite to magnesium nitrate of 1.6:1. The crushing strength of the particles was 5.2 kg after production. These particles were submitted to the same swelling experiment as above: the volume of the swelled particles was only 6% higher than the non-swelled particles and the crushing strength of the swelled particles was 3.7 kg. It is thought that the additional magnesium nitrate does not react with struvite and provide additional strength under swelling conditions.

## Claims

1. A solid, particulate composition comprising ammonium nitrate and struvite.

2. The solid, particulate composition according to claim 1, wherein the solid, particulate composition comprises ammonium sulphate and/or an inorganic filler, in particular wherein the inorganic filler is a calcium-containing inorganic filler.

3. The solid, particulate composition according to claim 2, wherein the calcium-containing inorganic filler is selected from the group of dolomite, gypsum, lime, limestone and/or mixtures thereof.

4. The solid, particulate composition according to any one of claims 1 to 3, further comprising one of magnesium nitrate, aluminium sulphate and/or mixtures thereof, in particular wherein the magnesium nitrate, aluminium sulphate and/or mixtures thereof is present in an amount of 0.1 to 5.0 weight% of the solid, particulate composition, in an amount of 0.1 to 3.0 weight% of the solid, particulate composition.

5. The solid, particulate composition according to any one of claims 1 to 4, wherein the solid, particulate composition comprises between 30 and 80 weight %, of ammonium nitrate, in particular between 60 and 80 weight%, more in particular between 65 and 80 weight%, even more in particular between 70 and 80 weight% of ammonium nitrate.

6. The solid, particulate composition according to any one of claims 2 to 5, wherein the solid, particulate composition comprises 9 to 30 weight% of the inorganic filler, in particular 10 to 30 weight% of the inorganic filler, more in particular 15 to 25 weight% of the inorganic filler.

7. The solid, particulate composition according to any one of claims 1 to 6, wherein the solid, particulate composition comprises 0.1 to 10 weight% of struvite, in particular 0.5 to 10, more in particular 1.0 to 10 weight% of struvite.

8. The solid, particulate composition according to any one of claims 1 to 7, wherein the solid, particulate composition comprises a coating layer, in particular an organic coating layer, in particular a coating layer comprising a wax, an alkyl phosphate ester, and an amine, in particular wherein the wax is a petroleum wax or a paraffin wax.

9. The solid, particulate composition according to any one of claims 1 to 8, wherein the median particle size, D50, of the solid, particulate composition is between 1.0 and 5.0 mm, in particular between 2.5 and 4.0 mm, as measured by sieving steps.

10. The solid, particulate composition according to any one of claims 1 to 9, wherein the solid, particulate composition comprises a core comprising ammonium nitrate and a layer, comprising ammonium nitrate and struvite, covering the core.

11. The solid, particulate composition according to any one of claims 4 to 10, wherein the solid, particulate composition comprises struvite and magnesium nitrate in a weight ratio between 3:1 to 1:10.

12. The solid, particulate composition according to any one of claims 1 to 11, wherein the solid, particulate composition comprises 60 to 80 weight% of ammonium nitrate, 10 to 25 weight% of dolomite, 1.0 to 5.0 weight% of struvite and 0 to 5.0 weight% of magnesium nitrate.

13. A method for the manufacture of a solid, particulate composition comprising ammonium nitrate and struvite, comprising the steps of:
a) providing a melt comprising ammonium nitrate;
b) adding an amount of struvite to the melt provided in step a);
c) mixing the melt comprising ammonium nitrate and struvite;
d) processing the melt obtained in step c) to form a solid, particulate composition.

14. Use of struvite in the manufacture of a solid, particulate composition comprising ammonium nitrate as an additive to improve the hardness to the solid, particulate composition.

15. Use of the solid, particulate composition according to any one of claims 1 to 12 as a fertilizer.
